# EUROPEAN PATENT SPECIFICATION

(11) **EP 2 571 408 B1**
(45) Date of publication and mention of the grant of the patent: **21.05.2014**
(21) Application number: 11720520.3
(22) Date of filing: 20.05.2011
(51) Int. Cl.: A47J 31/44

(54) **Beverage machine with ergonomic water management**
Getränkeautomat mit ergonomischer Wasserverwaltung
Machine de boissons avec gestion ergonomique de l'eau

(30) Priority: 21.05.2010 EP 10163637
(43) Date of publication of application: 27.03.2013
(73) Proprietor: Nestec S.A., 1800 Vevey (CH)
(72) Inventor: CAHEN, Antoine, CH-1005 Lausanne (CH); GRANGER, Eric, CH-1005 Lausanne (CH)
(74) Representative: Schnyder, Frank Simon
(86) International application number: PCT/EP2011/058226
(87) International publication number: WO 2011/144723

(56) References cited:
- EP-A1- 0 324 686
- EP-A1- 2 070 454
- EP-A2- 0 330 066
- DE-U1- 29 718 374
- GB-A- 2 066 433
- GB-A- 2 296 093

## Description

### Field of the Invention

The field of the invention pertains to the optimisation of the normal servicing of beverage preparation machines by a user, in particular to the management of a liquid supply, such as water supply, in the machine to prevent liquid shortage during beverage preparation. In particular, the machine may be configured to prepare beverages by circulating liquid such as water through a flavouring ingredient, in particular supplied to the machine within a capsule.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved; for other machines, the ingredients are stored and dosed automatically in the machine or else are added at the time of preparation of the drink.

Various beverage machines, such as coffee machines, are arranged to circulate liquid, usually water, from a water reservoir that is cold or heated by heating means, to a mixing or infusion chamber where the beverage is actually prepared by exposing the circulating liquid to a bulk or pre-packaged ingredient, for instance within a capsule. From this chamber, the prepared beverage is usually guided to a beverage dispensing area, for instance to a beverage outlet located above a cup or mug support area comprised or associated with the beverage machine. During or after the preparation process, used ingredients and/or their packaging is evacuated to a collection receptacle.

Whenever, the liquid reservoir is empty, the user must refill the reservoir in order to be able to prepare a further beverage. If the level of liquid in the reservoir is insufficient to carry out a beverage preparation process, a machine will either refuse to carry out the process if such a level can be detected or the machine will run dry during the beverage preparation process, in which case the dispensed beverage short of liquid will not correspond to the expected beverage. Possibly, the dry run will also unnecessarily stress or damage components of the beverage preparation machine, such as a pump or a heater of the machine.

Various systems have been developed for sensing the level of liquid in a reservoir of a beverage preparation machine. For instance, EP 10155336 discloses an optical sensor for sensing a minimum level in a water reservoir of a beverage preparation machine.

For allowing the user to communicate with such machines, for providing operation instructions to the machine or obtaining feed-back therefrom, various systems have been disclosed in the art, for instance as mentioned in the following references: AT 410 377, CH 682 798, DE 44 29 353, DE 20 2006 019 039, EP 1 448 084, EP 1 676 509, EP 1 707 088, EP 08 155 851.2, FR 2 624 844, GB 2 397 510, US 4,253,385, US 4,377,049, US 4,458,735, US 4,554,419, US 4, 767, 632, US 4,954,697, US 5,312,020, US 5,335,705, US 5,372,061, US 5,375,508, US 5,645,230, US 5,731,981, US 5,836,236, US 5, 927, 553, US 5,959,869, US 6, 182, 555, US 6, 354, 341, US 6,759,072, US 7,028,603, US 7,270,050, US 7,279,660, US 7,350,455, US 2007/0157820, WO 97/25634, WO 99/50172, WO 03/039309, WO 2004/030435, WO 2004/030438, WO 2006/063645, WO 2006/082064, WO 2006/090183, WO 2007/003062, WO 2007/003990, WO 2008/104751 PCT/EP08/054858, and EP 0324686.

In particular, US 4,767,632 discloses a beverage machine with a display adapted to display an error message, such as "COFFEE MILL DEFECTIVE", "RESERVOIR EMPTY", "WATER TANK EMPTY" or "PUMP DEFECTIVE". EP 1 707 088 discloses a coffee machine having a display or an indicator lamp to indicate that a receptacle for collecting brewed coffee is full and must be emptied. GB 2 397 510 discloses a coffee machine with a series of indicator LEDs, one of which may be used to indicate a low water level in the machine's tank. A similar interface arrangement is disclosed in US 5,836,236 and in WO 2008/104751.

Co-pending application WO/NO10121 discloses a system having a used-ingredient collector and a water supply reservoir with capacities adjusted to each other so that during normal use, the collector is filled at the same rate the water reservoir is emptied for simultaneous servicing. The level in the water supply is monitored via a sensor and the user is alerted by the machine for refilling the water reservoir and emptying the ingredient collector that is expected to be full at the same time. The water reservoir may bear a mark or sign to indicate to the user the level to which the reservoir should be filled so as to ensure coordination of the emptying of the water reservoir and filling of the ingredient collector.

WO/NO8930 discloses an ergonomic water warning system in which a panel is illuminated when the level of water in the reservoir is low and the reservoir needs to be refilled. Hence, the user is warned optically from a distance that the machine needs to be serviced, namely the reservoir needs to be refilled.

There is still a need to provide a system for allowing a user to reliably manage the supply of liquid in a beverage preparation machine.

### Summary of the Invention

An object of the invention is to provides a beverage preparation machine having a reservoir for supplying liquid and an ergonomic, reliable and inexpensive arrangement for alerting a user of a need to refill the reservoir.

The invention thus relates to a machine for preparing a beverage according to claim 1.

For instance, the machine is a coffee, tea or soup machine. The machine may be arranged for preparing within a brewing unit a beverage by passing hot or cold water or another liquid through a capsule containing a flavouring ingredient of the beverage to be prepared, such as ground coffee or tea or chocolate or cacao or milk powder.

Typically, the machine includes one or more of a pump, heater, drip tray, ingredient collector, liquid reservoir and fluid connection system for providing a fluid connection between the liquid reservoir and the brewing unit, etc... The configuration of a fluid circuit between a source of liquid, i.e. a reservoir, and a brewing unit, i.e. a suitable beverage preparation module, is for example disclosed in greater details in WO 2009/074550.

In accordance with the invention, the alerting means comprises a user-visible marking on or adjacent to the see-through reservoir wall at a location corresponding to a minimum level of liquid in the reservoir and visible by a user through the see-through reservoir wall, the minimum level corresponding to a level in the reservoir of said pre-determined volume of liquid.

The see-through reservoir wall may be transparent or sufficiently translucent to allow a user to see the level of liquid behind this wall.

Hence, the user may in permanence visually monitor the level of liquid in the reservoir and compare it to the reference marking that will indicate to the user whether the liquid contained in the reservoir is sufficient to prepare a desired volume of beverage or whether the reservoir needs to be refilled with liquid prior to requesting the desired beverage. A simple and inexpensive solution is thus provided for managing efficiently the refilling in time of the machine's reservoir. This solution system requires no electric or otherwise active arrangement that is exposed to technical failure or that requires maintenance or consumes energy during use.

Typically, the machine has an operative orientation for allowing a user to request a beverage, the reservoir being so arranged that the see-through reservoir wall and the user-visible marking are visible to a user operating the machine in the operative orientation to request a beverage.

The machine has a body, in particular a housing, including the circuit for circulating the liquid, the reservoir extending outside from such body. Usually, the beverage outlet extends from inside to outside the body. The body has: a front face bearing the beverage outlet; and a rear or lateral or top face adjacent to the reservoir. The reservoir extends sideways from the body so that the see-through reservoir wall and the user-visible marking are visible by a user from ahead the front face. Hence, when a user is in front of such a beverage preparation machine for operating the machine, the see-though reservoir wall and the marking extends sideways or upwards from the machine so as to remain visible to the user.

Typically, the see-through reservoir wall is generally upright. The reservoir may have a cavity for containing the liquid over a certain height. The see-through reservoir wall, and optionally the user-visible marking, may extend over this entire height. Alternatively, the see-through reservoir wall, and optionally the user-visible marking, extend over a limited part of this height about the minimum level of liquid.

The user-visible marking may comprises a numeric or text reference or a graphical representation of the predetermined volume, such as a representation of a user-recipient e.g. a cup. For instance, the reservoir bears the reference "LOW" at the minimum level of liquid or a numeric volume indication corresponding to the above predetermined volume, e.g. "45 ml" and/or "110 ml", in the case of a coffee machine preparing espresso coffees and/or lungo coffees.

An advantage of indicating a volume to the user lies in the educational effect for the user. Indeed, the user will quickly associate the beverage requested with the volume of liquid needed as indicated by the marking associated with the reservoir and be able to anticipate well ahead the number of beverages that may be prepared from a certain amount of liquid in the reservoir.

For instance, the user-visible marking comprises a scale, e.g. with horizontal lines referencing different levels of liquid in the reservoir. The scale can be a volumetric scale of said liquid contained in the reservoir at different levels, e.g. indicating the number of millilitre or decilitre of liquid in the reservoir at certain levels referenced by the scale. The scale can be configured to reference the number of predetermined volumes of the liquid contained in the reservoir at different levels. Hence, the scale may be associated with numeric references, e.g. "1", "2", "3"... or "I", "II", "III"... indicating the number of beverages that may dispensed with the liquid contained in the reservoir at any of the referenced levels.

To increase the intuitiveness of the system, the marking may include a graphical representation of a number of user-recipients, e.g. cups when the beverage is expected to be dispensed to a cup, corresponding to the number of predetermined volumes of liquid contained in the reservoir.

The machine's circuit can be configured to circulate a predetermined volume of the liquid from the reservoir selectable by a user from a plurality of different predetermined volumes, the alerting means comprising a plurality of user-visible markings at different locations on or adjacent to the reservoir corresponding to minimum levels of liquid in the reservoir for the different predetermined volumes of liquid. For instance, the beverage preparation machine is configured to dispense espressos, e.g. coffees having a volume of about 50 ml, and lungos, e.g. coffees having a volume of about 100 ml. The user-visible marking may combine a marking for the smaller predetermined volume of liquid and a marking for the larger predetermined volume. When there are more than two predetermined volumes, e.g. for espresso, lungo and American-type coffee, a corresponding number of reference markings may be combined on or adjacent to the reservoir, e.g. three references for the given example. Any number of different predetermined volumes are contemplated, e.g. the user may also be given to possibility to request ristretto coffee, e.g. 25 ml of coffee, in combination with one or more or all of the espresso, lungo and Americano-type coffees.

The circulating circuit of the beverage preparation machine may be arranged to circulate water from the reservoir and may comprise an ingredient chamber for containing a flavouring ingredient, such as ground coffee or tea, through which the water is circulated. A downstream portion of this chamber is in fluid connection with the beverage outlet for dispensing therethrough the water upon flavouring, the ingredient chamber is in particular configured to receive and hold a capsule containing the ingredient and to evacuated the capsule upon circulation of this water.

### Brief Description of the Drawings

The invention will now be described with reference to the schematic drawings, wherein:
- Figure 1 is a perspective view of an embodiment of a beverage preparation machine according to the invention;
- Figures 2 and 3 are a front view and a side view, respectively, of a reservoir of this machine; and
- Figure 4 illustrates a variation of this reservoir.

### Detailed description

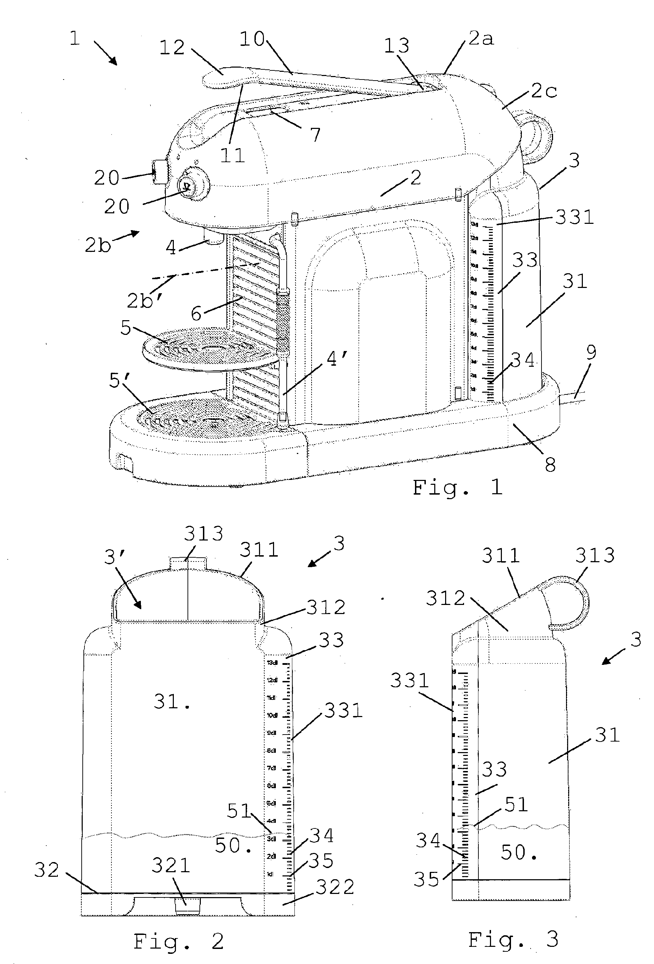

Figure 1 illustrates an embodiment of a beverage preparation machine 1 according to the present invention. Figures 2 and 3 show in greater details a reservoir 3 of machine 1.

Machine 1 can be electrically powered, typically by the mains, via an electric cord 9.

Machine 1 has an internal circuit for circulating liquid from reservoir 3, the circuit may be a beverage preparation module covered by a housing 2. The beverage preparation module in housing 2 is arranged for holding a flavouring ingredient, in particular a pre-portioned ingredient such as an ingredient supplied to such module within a capsule, and circulating a liquid 50 therethrough to form the beverage.

Hence, liquid 50, e.g. water, may be stored in tank 3 and supplied to the beverage preparation module from tank 3. The beverage, upon formation, can be dispensed via an outlet 4 to a dispensing area 5,5', e.g. a support for holding a user cup or mug. The dispensing area may include a first cup support 5 that is movable away from under outlet 4 so as to give access to a lower second cup support 5' for larger cups, e.g. for dispensing lungos or extra-large beverages. The lower cup support 5' may be connected to a base 8 of machine 1. Suitable movable cup supports are for example disclosed in EP 1867260 and in WO 2009/074557, the contents of which are hereby incorporated by way of reference. The storage capacity of collector 6 for used ingredient may be aligned to the storage capacity of reservoir 3 for the supply of liquid such as water, for instance as taught in WO/NO10121.

Machine 1 also includes a steam and/or hot water generator connected to an outlet 4', e.g. for the preparation of frothed milk and/or tea.

Adjacent to the beverage preparation module, machine 1 may have a collector 6 for used flavouring ingredient, e.g. ground coffee or tea upon brewing, for instance contained within capsules. Collector 6 may be positioned underneath the beverage preparation module to collect upon beverage preparation the used flavouring ingredient evacuated to collector 6, e.g. by gravity. Suitable collectors are for example disclosed in WO 2009/074559 and in WO 2009/135869, which are hereby incorporated by way of reference.

Machine 1 has a handle 10 movable between: a transfer position for loading the ingredient, e.g. within a capsule, into the module and/or evacuating such ingredient from the module; and a circulation position for circulating the liquid through the ingredient.

Typically, handle 10 actuates an ingredient holder with an ingredient chamber, such as a brewing unit, of the beverage preparation module from: a transfer position for insertion of the flavouring ingredient into the holder and/or evacuation of this ingredient therefrom; and a circulation position for circulating the liquid through this ingredient in the ingredient holder to form the beverage. Typically, the ingredient holder, e.g. a brewing unit, has two relatively movable parts that are moved apart for opening the ingredient holder into the transfer position and moved together for closing the ingredient holder into the circulation position. In the circulation position, the ingredient holder may tightly enclose the flavouring ingredient to ensure proper guidance of the liquid through the ingredient.

In the circulation position (not shown), handle 10 is resting on or in a top face 2a of machine 1. In particular handle 10 can be flush with housing 2.

As shown in Fig 1, handle 10 is a single-arm lever generally shaped as a straight bar that is slightly curved or bent at its extremity 11 for ergonomic reasons, namely for facilitating the manual application of force onto handle 10 by a convenient orientation of contact surface 12 for a user's hand when handle 10 is moved from the transfer position to the circulation position. In the circulation position (not shown), handle 10 with its extremity 11 may be flush with housing 2 that has a corresponding shape, e.g. to facilitate cleaning of the surface of housing 2.

Hence, handle 10 has a drive portion 12 arranged to be contacted and driven by a human hand to move the handle between the transfer position in which the flavouring ingredient, e.g. enclosed in a capsule, is inserted into the beverage preparation module for instance via a passage 7, and the circulation position in which the flavouring ingredient is housed in the beverage preparation module and liquid may be circulated therethrough to form the beverage.

Fig. 1 shows handle 10 in an intermediate position between the transfer position and the circulation position. In the transfer position, handle 10 entirely uncovers passage 7 for allowing the insertion of the flavouring ingredient, e.g. within a capsule, into the beverage preparation module.

Passage 7 can be arranged for introduction by gravity of the flavouring ingredient into the beverage preparation module, drive portion 12 being located generally above and/or adjacent passage 7 when handle 10 is in the transfer position to facilitate the coordination between manual introduction of a flavouring ingredient, e.g. within a capsule, into passage 7 and manually actuating handle 10, in particular using the same hand.

Furthermore, machine 1 includes a user-interface 20 for initiating circulation of the liquid through the flavouring ingredient in the beverage preparation module.

The beverage preparation module typically includes one or more of the following components:
a) the ingredient holder, such as a brewing unit, for receiving the flavouring ingredient of this beverage, in particular a pre-portioned ingredient supplied within a capsule, and for guiding an incoming flow of liquid 50, such as water, through this ingredient to beverage outlet 4;
b) an in-line heater, such as a thermoblock, for heating this flow of liquid 50 to be supplied to the ingredient holder;
c) a pump for pumping liquid 50 through the in-line heater;
d) one or more fluid connecting members for guiding liquid 50 from a source of liquid, such as tank 3 of liquid 50, to beverage outlet 4;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the ingredient holder, the in-line heater, the pump, liquid reservoir 3, ingredient collector 6, a flow of liquid 50, a pressure of liquid 50 and a temperature of liquid 50, and for communicating such characteristic(s) to the control unit.

The heater may be a thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable beverage preparation modules are for instance disclosed in WO 2009/074550 and WO 2009/130099, which are hereby incorporated by way of reference.

Handle 10 and user-interface 20 can be arranged so that user-interface 20 is operable by a human hand while it is still in contact with drive portion 12 of handle 10 upon driving handle 10 into the circulation position, as illustrated in Fig. 2.

For instance, drive portion 12 is contacted and actuatable by one or more of the index finger, middle finger, ring finger and little finger, user-interface 20 being operable by the hand's thumb while the other finger(s) is/are still in contact with handle 10, i.e. without having to move the hand away from handle 10 after moving handle 10 into its circulation position. For convenience, drive portion 12 may have a surface or profile specially adapted for being hand driven, e.g. the surface of drive portion 12 may include a means, such as a surface structure or composition, in particular an anti-skid surface that provides friction against the user's hand.

User-interface 20 may include a plurality of user selectors for initiating preparation of beverages of different flavours and/or of different sizes and/or different types. For instance, user-interface 20 includes a first user-selector and a second user-selector, e.g. in the form of push-buttons, for selecting the dispensing of espresso coffee and of lungo coffee.

Machine 1 illustrated in Fig 1 has a front face 2b bearing outlet 4 for delivering the beverage, user-interface 20 being located on or adjacent to front face 2b. In particular, user interface 20 is located below drive portion 12 to be easily accessible by the user's hand while still in position on drive portion 12 on handle 10 upon reaching the handle's circulation position. For instance, when handle 10 is in the circulation position, user-interface 20 is spaced from drive portion 12 by a distance in the range of 2 to 4 cm.

Drive portion 12 may form a part of least counter-force of handle 10 against a human hand while driving handle 10. For instance, handle 10 is arranged to pivot at a first end portion 13 thereof and drive portion 12 is located at the opposite end of handle 10 so that the lever arm is maximised and the force applied by the user's hand and necessary to vanquish the counter-force of the system minimised.

Machine 1 will now be discussed in greater details with reference to its means for alerting a user to refill reservoir 3. For drawing the user's attention to a need to refill reservoir 1 with liquid 50, machine 1 illustrated in Figs 1 to 3 as a particular non-limitative embodiment of the invention, has the features described hereafter.

Reservoir 3 is delimited by a see-through reservoir wall 33 such that a level 51 of liquid 50 inside reservoir 3 is visible by a user from outside the reservoir 3.

As mentioned above, machine 1 has a circuit for circulating a pre-determined volume of liquid 50 from reservoir 3 to outlet 4 for dispensing a beverage containing liquid 50 upon a user-request. The predetermined volume of liquid 50 will depend on the size of the desired beverage to be dispensed. For instance, to dispense a ristretto, about 25 ml of water 50 will be pumped, heated and circulated via ground coffee to load the water witch coffee flavours and dispense it via outlet 4. In the case of an espresso, 40 to 50 ml of water 50 will be circulated in a similar manner. To dispense a lungo coffee, the predetermined volume of water will be in the range of 80 to 120 ml and for dispensing American-type coffee, the volume of water will be in the range of 130 to 250 ml of water.

Machine 1 has a means for alerting a user of an available volume of liquid 50 in reservoir 3 that is below such a pre-determined volume. Hence, the user will be informed by machine 1 that the volume of liquid 50 in the reservoir is insufficient to prepare the desired beverage.

In accordance with the invention, the alerting means comprise a user-visible marking 34 on reservoir wall 33 at a location 35 corresponding to a minimum level of liquid in reservoir 3 and visible by a user through the see-through reservoir wall 33, the minimum level corresponding to a level in reservoir 33 of this pre-determined volume of liquid. Alternatively, the user-visible marking may be located adjacent to the reservoir, typically in a way such that the user may visually associate the marking with the visible level of liquid in the reservoir.

When machine 1 is standing upright as illustrated in Fig. 1, i.e. when base 8 rests on a support surface, e.g. on a table or shelf, with front face 2b bearing outlet 4 and interface 20 oriented towards and facing a user who wishes to request a beverage, machine 1 is its operative orientation.

Reservoir 3 is so arranged that see-through reservoir wall 33 and user-visible marking 34 are visible to a user operating such machine in the operative orientation to request a beverage.

As illustrated in Fig. 1, machine 1 has a body 2, in particular a housing, including the circuit for circulating the liquid, reservoir 3 extending outside from body 2. Moreover, body 2 has a rear face that is opposite front face and that is adjacent to reservoir 3. Alternatively, the reservoir may be located on or along or adjacent to a lateral face or a top face of the body.

Reservoir 3 extends sideways beyond and away from body 2 so that at least one flank or protruding part 331 of reservoir 3 is visible by a user from ahead the front face 2b looking axially towards face 2b, e.g. along a direction 2b' generally perpendicular to front face 2b, despite the fact that reservoir 3 is mounted at the back of body 2. Flank or protruding part 331 can be formed at least in part by see-through reservoir wall 33 so that user-visible marking 34 with liquid level 51 insid reservoir 3 are visible by such a user looking axially towards face 2b, e.g. along a direction 2b'.

See-through reservoir wall 33 is generally upright. Reservoir 3 has a cavity 3' for containing liquid 50 over a certain height, see-through reservoir wall 33, and user-visible marking 34 generally extending over this entire height. In a variation, the see-through reservoir wall and the user-visible marking extend over a limited part of the height about the minimum level of liquid, so that the user is alerted of the level of the liquid when reaching the minimum level. For the purpose of the invention, it is not absolutely necessary that the user monitors the level of liquid in reservoir 3 when it is well above the minimum level. For convenience and constructional economy, e.g. the materials involved in the manufacturing of reservoir 3, it may however be appropriate to have the see-through reservoir wall and optionally the user-visible marking extending of the substantially the entire height of the cavity of the reservoir. Moreover, this latter configuration increases the possibility to anticipate the need for refilling reservoir 3 well in advance, especially when the user-visible marking extends over the entire or a predominant part of see-through reservoir wall 33.

Moreover, reservoir 3 has a peripheral wall 31 and a bottom 32. Cavity 3' may be delimited by wall 31 and bottom 32. See-through wall 33 may be identical to, integral with or a distinct panel in peripheral wall 31. Bottom 32 has an outlet 321 for supplying liquid 50 into the circulation circuit. In a variation, such an outlet can be at a different location, e.g. at a lower part of the peripheral wall. Moreover, bottom 32 is supported by a foot 322 that may rest on base 8 of machine 1. In a variation, this foot may rest directly on a surface supporting the beverage preparation machine. In this case, an inlet of the circulation circuit may protrude out of housing 2 for connection with outlet 321 or, alternatively, the outlet of the reservoir may extend inside the housing of the beverage preparation machine. Suitable fluid connections, in particular between outlet 321 and the fluid circulation circuit and inside the fluid circuit, are disclosed in WO 2009/150030 and WO 2010/006953, the contents of which are hereby incorporated by way of reference.

Furthermore, reservoir 3 has a mouth delimited by a rim 311 for filling liquid 50 into reservoir 3. The mouth typically gives into cavity 3'. Reservoir 3 illustrated in Figs 1 to 3 has a narrowed neck 312 that may be covered by an overhanging rear part 2c of body 2. Rear part 2c serves as a cover for reservoir 3. In a variation, the reservoir has no neck and the peripheral wall surrounding the reservoir's cavity extends to the top of the reservoir to facilitate cleaning of the cavity.

In particular, for refilling or cleaning, reservoir 3 is typically separable from body 2. Hence, outlet 321 is configured to be disconnectable from the circulation circuit in housing 2. Outlet 321 is preferably connected to the circulation circuit via a liquid-tight sealing arrangement. For facilitating seizure of reservoir 3 for refilling, cleaning or for another purpose, reservoir 3 is fitted with a handle 3. Handle 3 forms a loop about a top part of reservoir 3, e.g. nearby rim 311. When filled with liquid to the top of cavity 3', reservoir 3 has a centre of gravity in a middle area of reservoir 3 well below handle 313 so that reservoir 3 can be carried single-handed via handle 313 without risk of spilling liquid from inside reservoir 3.

As illustrated in Figs 1 to 3, user-visible marking 34 comprises a numeric reference related to the predetermined volume. Specifically, a volumetric numeric indication as to the volume of liquid left in reservoir 3 is provided in decilitres, i.e. "1 dl", "2 dl" up to "13 dl". Hence, a user will be told by looking through wall 33 at level 51 of liquid 50 the available liquid and whether a beverage made from a predetermined volume of liquid known by the user will be preparable from liquid 50 present in reservoir 3. The communication to a user of the volume of liquid 50 left in reservoir 3 as a volumetric information offers the advantage to quickly make the user aware of the correspondence between a certain kind of beverage and the actual volume of beverage needed to prepare such a beverage. The user will just have to monitor the consumption of liquid from reservoir 3 during a beverage preparation process or acquire this information from elsewhere, e.g. from a user-manual. For instance, when a user knows that a certain number and type of beverages will be prepared during at a particular occasion, the user will be able to fill reservoir 3 to the level required for these beverages and not significantly thereabove, thus avoiding unnecessary excessive filling of reservoir 3 with liquid 50 and corresponding waste. Particularly for such a purpose, the user-visible marking may comprise a scale, e.g. a volumetric scale 34, as illustrated in Figs 1 to 3. Such a scale 34 is provided to reference the number of predetermined volumes of liquid 50 contained in the reservoir at different levels.

In an advantageous embodiment, the machine's circuit can be configured for circulating a predetermined volume of liquid 50 from reservoir 3 selectable by a user from a plurality of different predetermined volumes, e.g. by operating appropriately user interface 20. In this case, the alerting means may comprise a scale with a plurality of user-visible volumetric markings at different locations 34 on or adjacent to the reservoir corresponding to minimum levels of liquid in the reservoir for these different predetermined volumes of liquid 50.

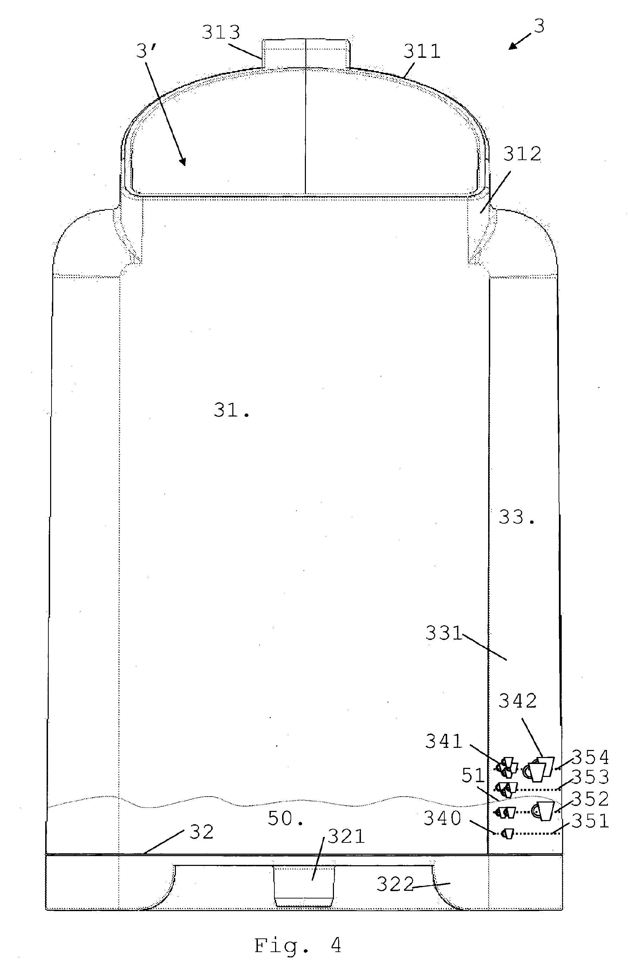

Fig 4, in which the same numeric references designate the same or similar elements, illustrates another embodiment of a reservoir 3 for a machine 1 according to the invention. In fact, the reservoir of the embodiment illustrated in Figs 1 to 3 may be substituted by reservoir 3 of Fig. 4.

Reservoir 3 shown in Fig. 4 has a user-visible marking that comprises a scale 340 with different levels 351,352,353,354 associated with different predetermined volumes for preparing beverages with machine 1. A graphical representation 341,342 of the predetermined volumes, in particular an intuitive graphical representation of the predetermined volumes in the form of a user-recipient such as a cup corresponding to the predetermined volume, is associated with the scale. In particular, the marking includes a graphical representation of a number of user-recipients, such as cups, corresponding to the number of predetermined volumes at a given level 51 of liquid 50 in reservoir 3.

As in the previous embodiment, the machine's circuit can be configured for circulating a predetermined volume of liquid 50 from reservoir 3 selectable by a user from a plurality of different predetermined volumes, e.g. two different predetermined volumes selectable by operating appropriately user-interface 20. The alerting means has a plurality of user-visible markings including the graphical illustrations of the user-recipients 341,342 at different locations 351,352,353,354 on or adjacent to see-through wall 33 corresponding to minimum levels of liquid in reservoir 3 for these different predetermined volumes of liquid.

For instance, machine 1 may be configured to dispense espressos requiring each 50 ml of water 50 from reservoir 3 and lungos requiring each 100 ml of water 50 from reservoir 3. Espressos and lungo water volumes are indicated on reservoir 3 by markings illustrating small cups 341 and large cups 342, respectively. Hence, when level 51 of water 50 reaches line 351 associated with a single small cup 341, the user will be alerted to the fact that machine 1 will be able to prepare only one espresso before reservoir 3 is refilled. When level 51 of water 50 reaches line 352 associated with a pair of small cups 341 and a large cup 342, the user will be alerted to the fact that machine 1 will be able to prepare only two espresso or one lungo coffee before reservoir 3 is refilled. The same principle applies *mutatis mutandis* with the upper lines 353,354 and the small and large cups 341,342 associated therewith.

## Claims

1. A machine (1) for preparing a beverage having:
- a reservoir (3) for containing a liquid (50) that has a flank (331) formed at least in part by a see-through reservoir wall (33) such that a level (51) of said liquid is visible by a user from outside the reservoir;
- a circuit for circulating a pre-determined volume of said liquid from the reservoir to an outlet (4) for dispensing a beverage containing said liquid upon a user-request;
- a body (2) including the circuit for circulating the liquid and having a front face (2b) bearing the beverage outlet (4); and
- a means for alerting a user of an available volume of liquid in the reservoir that is below said pre-determined volume,
the alerting means comprising a user-visible marking (35,351,352) on or adjacent to the see-through reservoir wall (33) at a location corresponding to a minimum level of liquid in the reservoir and visible by a user through the see-through reservoir wall, the minimum level corresponding to a level in the reservoir of said pre-determined volume of liquid,
**characterised in that** the body has a rear or lateral or top face adjacent to the reservoir (3) and **in that** the reservoir (3) extends outside and sideways from the body such that the flank (331) with the see-through reservoir wall (33) and the user-visible marking (35,351,352) are visible by a user from ahead the front face (2b).

2. The machine of claim 1, which has an operative orientation for allowing a user to request a beverage, the reservoir (3) being so arranged that the see-through reservoir wall (33) and the user-visible marking (35,351,352) are visible to a user operating such machine (1) in the operative orientation to request a beverage.

3. The machine of claim 1 or 2, wherein the body (2) forms a housing and/or wherein the body's front face (2b) bears a user-interface (20).

4. The machine of any preceding claim, wherein the reservoir (3) has a peripheral wall (31) and a bottom (32), see-through wall (33) being identical to, integral with or a distinct panel in the peripheral wall.

5. The machine of any preceding claim, wherein the see-through reservoir wall (33) is generally upright.

6. The machine of claim 5, wherein the reservoir has a cavity (3') for containing said liquid (50) over a certain height, the see-through reservoir wall (33), and optionally the user-visible marking (34), extending over the entire height.

7. The machine of claim 5, wherein the reservoir has a cavity for containing said liquid over a certain height, the see-through reservoir wall, and optionally the user-visible marking, extending over a limited part of the height about the minimum level of liquid.

8. The machine of any preceding claim, wherein the user-visible marking (35) comprises a numeric reference or a graphical representation (341,342) of said predetermined volume.

9. The machine of claim 8, wherein said graphical representation (341,342) includes a representation of a user-recipient such as a cup.

10. The machine of any preceding claim, wherein the user-visible marking comprises a scale (34,340).

11. The machine of claim 10, wherein the scale (34) is a volumetric scale for said liquid (50) contained in the reservoir (3) at different levels.

12. The machine of claim 10, wherein the scale (340) is configured to reference the number of predetermined volumes of said liquid (50) contained in the reservoir at different levels.

13. The machine of claim 12, wherein marking comprises a scale (340) with a graphical representation of a number of user-recipients (341,342), such as cups, corresponding to the number of predetermined volumes.

14. The machine of any preceding claim, wherein said circuit is configured for circulating a predetermined volume of said liquid (50) from the reservoir (3) selectable by a user from a plurality of different predetermined volumes, the alerting means comprising a plurality of user-visible markings (34,341,342) at different locations on or adjacent to the reservoir corresponding to minimum levels of liquid in the reservoir for said different predetermined volumes of liquid.

15. The machine of any preceding claim, wherein the circulating circuit is arranged to circulate water (50) from the reservoir (3) and comprises an ingredient chamber for containing a flavouring ingredient, such as ground coffee or tea, through which said water is circulated, a downstream portion of the chamber being in fluid connection with the beverage outlet (4) for dispensing therethrough said water upon flavouring, the ingredient chamber being in particular configured to receive and hold a capsule containing said ingredient and to evacuated said capsule upon circulation of said water.

## Patentansprüche

1. Maschine (1) zur Zubereitung eines Getränks mit:
- einem Behälter (3) zum Aufnehmen einer Flüssigkeit (50), der eine zumindest teilweise von einer durchsichtigen Behälterwand (33) gebildete Seite (331) aufweist, so dass ein Füllstand (51) der Flüssigkeit für einen Benutzer von außerhalb des Behälters sichtbar ist;
- einem Kreislauf, in dem eine vorgegebenes Menge der Flüssigkeit aus dem Behälter zu einem Auslass (4) zirkuliert, um auf Anforderung eines Benutzers ein die Flüssigkeit enthaltendes Getränk abzugeben;
- einem Körper (2), der den Kreislauf zum Zirkulieren der Flüssigkeit aufweist und eine den Getränkeauslass (4) tragende Stirnseite (2b) hat; sowie
- einer Einrichtung, die einen Benutzer warnt, wenn eine verfügbare Flüssigkeitsmenge in dem Behälter unter der vorgegebenen Menge liegt,
wobei die Warneinrichtung eine für den Benutzer sichtbare Markierung (35, 351, 352) auf oder neben der durchsichtigen Behälterwand (33) an einer Stelle umfasst, die einem Mindestflüssigkeitsfüllstand in dem Behälter entspricht und durch die durchsichtige Behälterwand für einen Benutzer sichtbar ist, wobei der Mindestfüllstand einem Füllstand der vorgegebenen Flüssigkeitsmenge in dem Behälter entspricht,
**dadurch gekennzeichnet, dass** der Körper eine hintere oder seitliche oder obere Fläche angrenzend an den Behälter (3) aufweist und dass sich der Behälter (3) außen und seitlich von dem Körper erstreckt, so dass die Seite (331) mit der durchsichtigen Behälterwand (33) und die für den Benutzer sichtbare Markierung (35, 351, 352) für einen Benutzer von vor der Stirnseite (2b) aus sichtbar sind.

2. Maschine gemäß Anspruch 1, welche eine Betriebsausrichtung aufweist, die dem Benutzer die Anforderung eines Getränks ermöglicht, wobei der Behälter (3) derart angeordnet ist, dass die durchsichtige Behälterwand (33) und die für den Benutzer sichtbare Markierung (35, 351, 352) für einen Benutzer sichtbar sind, der die Maschine (1) in der Betriebsausrichtung zur Anforderung eines Getränks betätigt.

3. Maschine gemäß Anspruch 1 oder 2, wobei der Körper (2) ein Gehäuse bildet und/oder wobei die Stirnseite (2b) des Körpers eine Benutzeroberfläche (20) trägt.

4. Maschine gemäß einem vorhergehenden Anspruch, wobei der Behälter (3) eine Umfangswand (31) und einen Boden (32) aufweist, wobei die durchsichtige Wand (33) identisch mit, einstückig mit oder als ein getrenntes Feld in der Umfangswand ausgebildet ist.

5. Maschine gemäß einem vorhergehenden Anspruch, wobei die durchsichtige Behälterwand (33) im Allgemeinen aufrecht steht.

6. Maschine gemäß Anspruch 5, wobei der Behälter einen Hohlraum (3') zum Aufnehmen der Flüssigkeit (50) über einer bestimmten Höhe aufweist, wobei sich die durchsichtige Behälterwand (33), und wahlweise die für den Benutzer sichtbare Markierung (34), über die gesamte Höhe erstrecken.

7. Maschine gemäß Anspruch 5, wobei der Behälter einen Hohlraum zum Aufnehmen der Flüssigkeit über einer bestimmten Höhe aufweist, wobei sich die durchsichtige Behälterwand, und wahlweise die für den Benutzer sichtbare Markierung, über einen begrenzten Teil der Höhe um den Mindestflüssigkeitsfüllstand erstrecken.

8. Maschine gemäß einem vorhergehenden Anspruch, wobei die für den Benutzer sichtbare Markierung (35) eine numerische Angabe oder eine graphische Darstellung (341, 342) der vorgegebenen Menge umfasst.

9. Maschine gemäß Anspruch 8, wobei die graphische Darstellung (341, 342) eine Darstellung eines Benutzergefäßes wie z.B. einer Tasse aufweist.

10. Maschine gemäß einem vorhergehenden Anspruch, wobei die für den Benutzer sichtbare Markierung eine Skala (34, 340) umfasst.

11. Maschine gemäß Anspruch 10, wobei die Skala (34) eine Volumenskala für die in dem Behälter (3) enthaltene Flüssigkeit (50) bei unterschiedlichen Füllständen ist.

12. Maschine gemäß Anspruch 10, wobei die Skala (340) so ausgeführt ist, dass sie sich auf die Anzahl an vorgegebenen Mengen der in dem Behälter enthaltenen Flüssigkeit (50) bei unterschiedlichen Füllständen bezieht.

13. Maschine gemäß Anspruch 12, wobei die Markierung eine Skala (340) mit einer graphischen Darstellung einer Anzahl von Benutzergefäßen (341, 342), wie z.B. Tassen, umfasst, die der Anzahl der vorgegebenen Mengen entspricht.

14. Maschine gemäß einem vorhergehenden Anspruch, wobei der Kreislauf so ausgeführt ist, dass durch diesen eine vorgegebene Menge der Flüssigkeit (50) aus dem Behälter (3) fließt, die ein Benutzer aus einer Vielzahl von verschiedenen vorgegebenen Mengen auswählen kann, wobei die Warneinrichtung eine Vielzahl von für den Benutzer sichtbaren Markierungen (34, 341, 342) an unterschiedlichen Stellen auf oder neben dem Behälter umfasst, die Mindestflüssigkeitsfüllständen in dem Behälter für die unterschiedlichen vorgegebenen Flüssigkeitsmengen entsprechen.

15. Maschine gemäß einem vorhergehenden Anspruch, wobei der Zirkulationskreislauf so angeordnet ist, dass Wasser (50) aus dem Behälter (3) durch diesen fließt, und eine Zutatenkammer zur Aufnahme einer Geschmackszutat wie z.B. gemahlenen Kaffee oder Tee umfasst, durch die das Wasser hindurchfließt, wobei ein stromabwärts gerichteter Abschnitt der Kammer in Fließverbindung mit dem Getränkeauslass (4) steht, um durch diesen das Wasser nach der Aromatisierung abzugeben, wobei die Zutatenkammer insbesondere so ausgeführt ist, dass sie eine die Zutat enthaltende Kapsel aufnimmt und hält und die Kapsel nach der Wasserzirkulation entleert.

## Revendications

1. Machine (1) pour préparer une boisson présentant :
- un réservoir (3) pour contenir un liquide (50) qui présente un flanc (331) formé au moins en partie par une paroi de réservoir transparente (33) de telle sorte qu'un niveau (51) dudit liquide est visible par un utilisateur depuis l'extérieur du réservoir ;
- un circuit pour la circulation d'un volume prédéterminé dudit liquide depuis le réservoir jusqu'à une sortie (4) pour distribuer une boisson contenant ledit liquide suite à une demande utilisateur ;
- un corps (2) comprenant le circuit pour la circulation du liquide et présentant une face avant (2b) portant la sortie de boisson (4) ; et
- un moyen pour alerter un utilisateur d'un volume disponible de liquide dans le réservoir qui est inférieur audit volume prédéterminé,
le moyen d'alerte comprenant un marquage visible pour l'utilisateur (35, 351, 352) sur ou adjacent à la paroi de réservoir transparente (33) en un emplacement correspondant à un niveau minimum de liquide dans le réservoir et visible par un utilisateur à travers la paroi de réservoir transparente, le niveau minimum correspondant à un niveau dans le réservoir dudit volume prédéterminé de liquide,
**caractérisée en ce que** le corps présente une face arrière ou latérale ou supérieure qui est adjacente au réservoir (3) et **en ce que** le réservoir (3) s'étend à l'extérieur et de manière latérale par rapport au corps de telle sorte que le flanc (331) avec la paroi de réservoir transparente (33) et le marquage visible pour l'utilisateur (35, 351, 352) sont visibles par un utilisateur depuis l'avant de la face avant (2b).

2. Machine selon la revendication 1, qui présente une orientation de fonctionnement pour permettre à un utilisateur de demander une boisson, le réservoir (3) étant agencé de sorte que la paroi de réservoir transparente (33) et le marquage visible pour l'utilisateur (35, 351, 352) sont visibles pour un utilisateur faisant fonctionner ladite machine (1) dans l'orientation de fonctionnement pour demander une boisson.

3. Machine selon la revendication 1 ou 2, dans laquelle le corps (2) forme un boîtier et/ou dans laquelle la face avant du corps (2b) porte une interface utilisateur (20).

4. Machine selon l'une quelconque des revendications précédentes, dans laquelle le réservoir (3) présente une paroi périphérique (31) et un fond (32), la paroi transparente (33) étant identique à, réalisée d'une seule pièce avec ou un panneau distinct dans la paroi périphérique.

5. Machine selon l'une quelconque des revendications précédentes, dans laquelle la paroi de réservoir transparente (33) est généralement droite.

6. Machine selon la revendication 5, dans laquelle le réservoir présente une cavité (3') pour contenir ledit liquide (5) sur une certaine hauteur, la paroi de réservoir transparente (33), et facultativement le marquage visible pour l'utilisateur (34), s'étendant sur toute la hauteur.

7. Machine selon la revendication 5, dans laquelle le réservoir présente une cavité pour contenir ledit liquide sur une certaine hauteur, la paroi de réservoir transparente, et facultativement le marquage visible pour l'utilisateur, s'étendant sur une partie limitée de la hauteur autour du niveau minimum de liquide.

8. Machine selon l'une quelconque des revendications précédentes, dans laquelle le marquage visible pour l'utilisateur (35) comprend une référence numérique ou une représentation graphique (341, 342) dudit volume prédéterminé.

9. Machine selon la revendication 8, dans laquelle ladite représentation graphique (341, 342) comprend une représentation d'un récipient de l'utilisateur comme par exemple une tasse.

10. Machine selon l'une quelconque des revendications précédentes, dans laquelle le marquage visible pour l'utilisateur comprend une échelle (34, 340).

11. Machine selon la revendication 10, dans laquelle l'échelle (34) est une échelle volumétrique pour ledit liquide (50) contenu dans le réservoir (3) à différents niveaux.

12. Machine selon la revendication 10, dans laquelle l'échelle (340) est configurée pour référencer le nombre de volumes prédéterminés dudit liquide (50) contenu dans le réservoir à différents niveaux.

13. Machine selon la revendication 12, dans laquelle le marquage comprend une échelle (340) avec une représentation graphique d'un nombre de récipients utilisateur (341, 342), comme par exemple des tasses, correspondant au nombre de volumes prédéterminés.

14. Machine selon l'une quelconque des revendications précédentes, dans laquelle ledit circuit est configuré pour la circulation d'un volume prédéterminé dudit liquide (50) à partir du réservoir (3) sélectionnable par un utilisateur à partir d'une pluralité de volumes prédéterminés différents, le moyen d'alerte comprenant une pluralité de marquages visibles pour l'utilisateur (34, 341, 342) à différents emplacements sur ou adjacents au réservoir correspondant à des niveaux minimum de liquide dans le réservoir pour lesdits volumes prédéterminés différents de liquide.

15. Machine selon l'une quelconque des revendications précédentes, dans laquelle le circuit de circulation est agencé pour la circulation d'eau (50) à partir du réservoir (3) et comprend une chambre d'ingrédient pour contenir un ingrédient aromatique, comme par exemple du café moulu ou du thé, à travers lequel ladite eau circule, une partie avale de la chambre étant en liaison fluidique avec la sortie de boisson (4) pour distribuer à travers celle-ci ladite eau après aromatisation, la chambre d'ingrédient étant en particulier configurée pour recevoir et maintenir une capsule contenant ledit ingrédient et pour évacuer ladite capsule après circulation de ladite eau.
